# EUROPEAN PATENT SPECIFICATION

(11) **EP 2 578 466 B1**
(45) Date of publication and mention of the grant of the patent: **16.05.2018**
(21) Application number: 12187550.4
(22) Date of filing: 05.10.2012
(51) Int. Cl.: B61B 11/00, B61B 12/00

(54) **TRANSPORTATION UNIT FOR A CABLE TRANSPORTATION SYSTEM, CABLE TRANSPORTATION SYSTEM COMPRISING SUCH A TRANSPORTATION UNIT AND METHOD OF HEATING A TRANSPORTATION UNIT OF A CABLE TRANSPORTATION SYSTEM**
FAHRZEUG FÜR EINE LUFTSEILBAHN, LUFSEILBAHN MIT EINEM SOLCHEN FAHRZEUG UND VERFAHREN ZUR HEIZUNG EINES FAHRZEUGES EINER LUFTSEILBAHN
VEHICULE DE TELEPHERIQUE, TELEPHERIQUE AVEC UN TEL VEHICULE ET PROCEDE DE CHAUFFAGE D'UN VEHICULE DE TELEPHERIQUE

(30) Priority: 06.10.2011 IT MI20111824
(43) Date of publication of application: 10.04.2013
(73) Proprietor: LEITNER S.p.A., Vipiteno (BZ) (IT)
(72) Inventor: Hofer, Robert, 39041 BRENNERO (IT)
(74) Representative: Bergadano, Mirko

(56) References cited:
- EP-A1- 1 396 407
- EP-A1- 1 495 935
- WO-A1-2004/080776
- FR-A- 1 592 801
- FR-A1- 2 934 833
- US-A1- 2008 282 928

## Description

The present invention relates to a transportation unit for a cable transportation system, a cable transportation system comprising such a transportation unit, and a method of heating a transportation unit of a cable transportation system.

More specifically, the present invention relates to a transportation unit for a cable transportation system comprising a cable looped about a first and second pulley; the transportation unit being connected to said cable and comprising a seat, and a heating element for heating the transportation unit. A transportation unit is disclosed in documents US 2008/0282928 A1 (corresponding to the preamble of claim 1) and EP 1495935 A1. The transportation unit normally comprises an electric energy transmission system based on a sliding contact, which connects with an electrically powered cable inside the stations. As the transportation unit travels through the stations, the heating element is powered by the electric energy transmission system to heat the transportation unit.

The heating element is only powered as the transportation unit travels through the station. And, given the low temperature levels the transportation unit may reach before entering the station, and the short length of time it is heated, the heating element must be capable of heating the transportation unit to an acceptable temperature even in the worst conditions.

One problem of the known art lies in the temperature of the transportation unit outside the station depending on weather conditions and direct sunlight, and so being extremely variable. For example, on sunny spring days, the temperature of the transportation unit does not fall to a particularly uncomfortable level, whereas the same amount of energy is spent to heat it, with the result that, in some cases, it may even be overheated, thus not only wasting electric energy, but also causing discomfort to passengers.

It is an object of the present invention to provide a transportation unit for a cable transportation system, designed to eliminate the drawbacks of the known art.

According to the present invention as defined in claim 1, there is provided a transportation unit for connection to a station of a cable transportation system, the transportation unit comprising at least one temperature sensor located to determine the temperature of at least one portion of the transportation unit; at least one heating element connected thermally to the transportation unit; transportation unit connection terminals for electric connection to corresponding station connection terminals of the station; and transportation unit selective connection elements which are activated alternatively for connecting the temperature sensor electrically to the transportation unit connection terminals and disconnecting the heating element in a first operating configuration, and for connecting the heating element to the transportation unit connection terminals and disconnecting the temperature sensor in a second operating configuration.

By providing a temperature sensor adjacent to the heated element, the transportation unit is heated appropriately, thus preventing overheating, saving electric energy, and improving passenger comfort. And, by virtue of the transportation unit selective connection elements, the first connection terminals are used to transmit the temperature measurement, as well as to receive electric energy to power the heating element.

It is another object of the present invention to provide a cable transportation system designed to eliminate the drawbacks of the known art.

According to the present invention as defined in claim 7, there is provided a cable transportation system comprising at least one station; a first pulley inside the station; a cable connected to the first pulley; a transportation unit as claimed in any one of Claims 1 to 6; a station heating device inside the station; and station connection terminals connectable to corresponding transportation unit connection terminals, when the transportation unit is inside the station, to connect the heating element and the temperature sensor of the transportation unit to the station heating device; and wherein the station heating device is designed to determine the amount of electric energy to supply to the heating element, as the transportation unit travels through the station, on the basis of a temperature detected by the temperature sensor.

Another object of the present invention is to provide a method of heating a transportation unit of a cable transportation system.

According to the present invention as defined in claim 14, there is provided a method of heating a transportation unit of a cable transportation system; the cable transportation system comprising at least one station, a first pulley inside the station, a cable connected to the first pulley, and a transportation unit connectable selectively to the cable and having a heating element, at least one temperature sensor (24) and transportation unit connection terminals (34a, 34b) for electric connection to corresponding station connection terminals (25a, 25b) of the station (4); the method comprising the steps of :
- connecting the temperature sensor (24) electrically to the transportation unit connection terminals (34a, 34b) and disconnecting the heating element (22) in a first operating configuration by means of transportation unit selective connection elements (40, 44);
- determining the temperature of at least one portion of the transportation unit;
- connecting the heating element (22) to the transportation unit connection terminals (34a, 34b) and disconnecting the temperature sensor (24) in a second operating configuration by means of said selective connection elements (40, 44); and
- powering the heating element, as the transportation unit travels through the station, as a function of the temperature determined.

A non-limiting embodiment of the present invention will be described by way of example with reference to the attached drawings, in which:
Figure 1 shows a schematic overhead view, with parts removed for clarity, of a cable transportation system in accordance with the present invention;

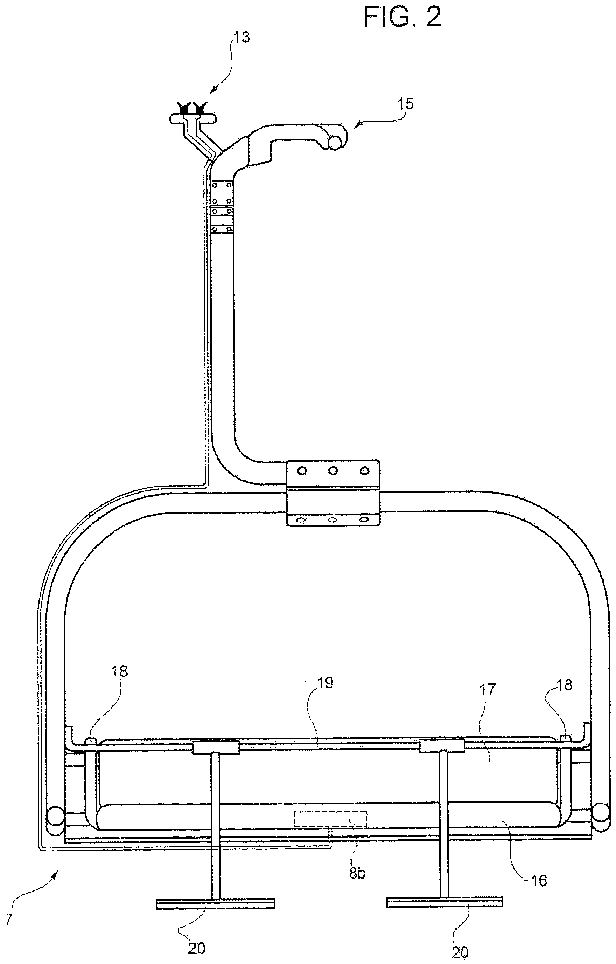

Figure 2 shows a side view, with parts removed for clarity, of a transportation unit of the Figure 1 cable transportation system;

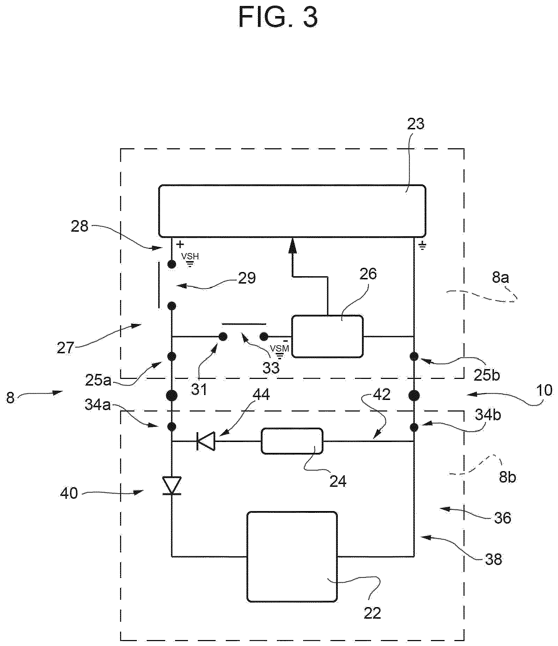

Figure 3 shows a simplified block diagram of part of the Figure 1 cable transportation system.

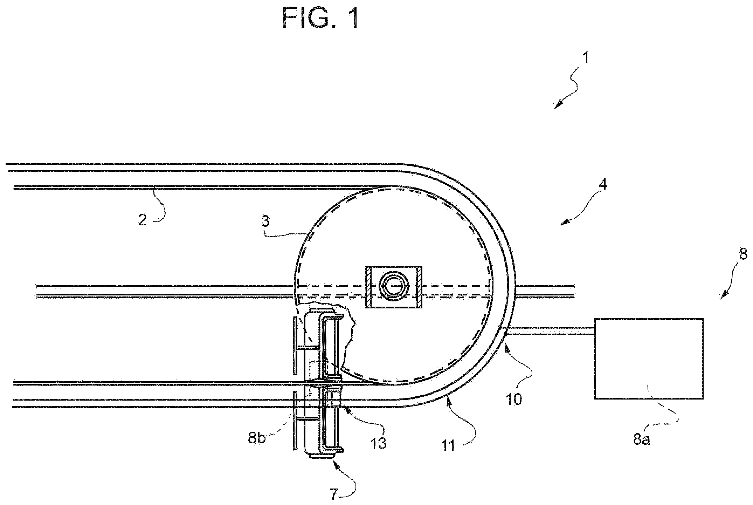

Number 1 in Figure 1 indicates as a whole a cable transportation system comprising a cable 2 looped about a pulley 3 at a station 4, and about another pulley (not shown) at another station (not shown); transportation units 7; and a heating device 8 for heating transportation units 7, which, in the example shown, are chairs.

Heating device 8 comprises station heating devices 8a located at station 4 and any other stations (not shown) of system 1; and transportation unit heating devices 8b, each located on a respective transportation unit 7. For the sake of simplicity, reference is made hereinafter solely to station 4, it being understood, however, that the same also applies to any other stations in cable transportation system 1.

Cable transportation system 1 also comprises an electric energy transmission system 10 for connecting transportation unit heating devices 8b selectively to station heating devices 8a as transportation units 7 travel through station 4.

Electric energy transmission system 10 comprises conductors 11 connected to station heating device 8a and located along the path of transportation unit 7 inside station 4; and conductors 13 located on respective transportation units 7 and connected to respective transportation unit heating devices 8b.

Conductor 13 is designed to connect with conductor 11, e.g. by means of a sliding contact, on entering station 4.

Each transportation unit 7 comprises a clamp 15 for preferably removable connection to cable 2; a seat 16; a backrest 17; two armrests 18; and a safety bar 19 - in the example shown, with at least one footrest per passenger. An alternative embodiment, not shown, of the present invention has no footrest.

Each transportation unit 7 also comprises at least one heating element 22 housed inside and for heating seat 16.

In an alternative embodiment not shown, the heating element is housed in the backrest of the transportation unit.

Station heating device 8a comprises a heating control unit 23 connectable selectively to transportation unit heating devices 8b, as transportation units 7 travel through station 4, to power respective heating elements 22 and control thermal energy supply.

Each transportation unit 7 also comprises a temperature sensor 24 housed inside and for detecting the temperature of seat 16, and which, in one embodiment of the invention, is heat resistive.

In an alternative embodiment not shown, the temperature sensor is housed in the backrest of the transportation unit.

Station heating device 8a has two station connection terminals 25a, 25b, and comprises a measuring module 26 connectable to temperature sensor 24 to measure temperature on the basis of an electric quantity reading associated with temperature sensor 24.

More specifically, station heating device 8a comprises an electric circuit 27, which has a branch 28 comprising heating control unit 23 and a preferably controllable switch 29 series-connected along branch 28; and a branch 31 comprising measuring module 26 and a preferably controllable switch 33 series-connected along branch 31. Branches 28 and 31 are parallel-connected to station connection terminals 25a, 25b of station heating device 8a.

Transportation unit heating device 8b has two transportation unit connection terminals 34a, 34b, and comprises an electric circuit 36, which has a branch 38 comprising heating element 22 and a switch 40 series-connected along branch 38. Switch 40 is preferably a diode 40 with the cathode connected to heating element 22, and the anode connected to transportation unit connection terminal 34a. Electric circuit 36 also has a branch 42 comprising temperature sensor 24 and a switch 44 connected in series. Switch 44 is preferably a diode 44 with the anode connected to temperature sensor 24, and the cathode connected to transportation unit connection terminal 34a. Branches 38 and 42 are parallel-connected to transportation unit connection terminals 34a and 34b of transportation unit heating device 8b.

The cathode of diode 44 is thus connected to the anode of diode 40 and to transportation unit connection terminal 34a. Given the configuration of diodes 40 and 44 along branches 36 and 42, only one of diodes 40, 44 conducts, and the other is disabled, when voltage is applied between transportation unit connection terminals 34a, 34b, so current only flows in either temperature sensor 24 or heating element 22. More specifically, when the voltage between transportation unit connection terminals 34a, 34b is negative (i.e. when transportation unit connection terminal 34a is at a lower potential than transportation unit connection terminal 34b), diode 44 conducts and diode 40 is disabled, so only temperature sensor 24 is connected to transportation unit connection terminals 34a, 34b. Conversely, when the voltage between transportation unit connection terminals 34a, 34b is positive, diode 40 conducts and diode 44 is disabled, so only heating element 22 is connected to transportation unit connection terminals 34a, 34b.

Station heating device 8a controls switches 29 and 33 so that one is closed and the other open.

More specifically, as transportation unit 7 enters station 4, transportation unit heating device 8b is connected to station heating device 8a by electric energy transmission system 10. Station heating device 8a closes switch 33 and opens switch 29, so measuring module 26 is connected to station connection terminals 25a, 25b, and heating control unit 23 is disconnected. Measuring module 26 imposes a negative measuring voltage VSM between station connection terminals 25a and 25b, and therefore also between transportation unit connection terminals 34a and 34b. Diode 44 permits passage of a measuring current which, by virtue of temperature sensor 24, depends on the temperature of transportation unit 7 and is acquired by measuring module 26, which supplies heating control unit 23 with the temperature of seat 16. If the temperature reading is below a given threshold, heating control unit 23 determines, on the basis of the received temperature measurement, the total electric energy supply needed by heating element 22 to heat transportation unit 7 to a reference temperature. Heating control unit 23 opens switch 33, closes switch 29, and imposes a positive heating voltage VSH to operate heating element 22. More specifically, the heating voltage VSH value is chosen on the basis of the travelling time of transportation unit 7 through station 4, to ensure heating element 22 receives the total electric energy supply determined by heating control unit 23.

In an alternative embodiment, the transportation unit comprises a number of heating elements.

In an alternative embodiment, the transportation unit comprises a number of temperature sensors.

In an alternative embodiment, heating control unit 23 determines the power delivered and, when the determined amount of thermal energy has been supplied to the heating element, opens switch 29 and cuts off heating to transportation unit 7.

In an alternative embodiment not shown, the transportation unit comprises a car with a seat housing the transportation unit heating device.

In the present invention, heating of transportation unit 7 is controlled on the basis of its initial temperature, and only the actual heat necessary to heat transportation unit 7 is supplied, thus saving energy and avoiding discomfort to passengers. Moreover, given the configuration of station and transportation unit heating devices 8a and 8b, electric energy transmission system 10 provides for transmitting both the temperature signal and the necessary heating power, is therefore highly straightforward and efficient, and needs no additional system for communicating the temperature signal.

Clearly, changes may be made to the present invention if not thereby departing from its scope as defined by the accompanying Claims.

## Claims

1. A transportation unit for connection to a station (4) of a cable transportation system (1), the transportation unit (7) comprising at least one temperature sensor (24) located to determine the temperature of at least one portion (16, 17) of the transportation unit (7); at least one heating element (22) connected thermally to the transportation unit (7); and transportation unit connection terminals (34a, 34b) for electric connection to corresponding station connection terminals (25a, 25b) of the station (4); **characterised by** transportation unit selective connection elements (40, 44) which are activated alternatively for connecting the temperature sensor (24) electrically to the transportation unit connection terminals (34a, 34b) and disconnecting the heating element (22) in a first operating configuration, and for connecting the heating element (22) to the transportation unit connection terminals (34a, 34b) and disconnecting the temperature sensor (24) in a second operating configuration.

2. A transportation unit as claimed in Claim 1, wherein the transportation unit selective connection elements (40, 44) comprise a first transportation unit switch (40) series-connected to the heating element (22); and a second transportation unit switch (44) series-connected to the temperature sensor (24); and wherein when in use the first switch (40) and second switch (44) are activated alternatively.

3. A transportation unit as claimed in Claim 2, wherein the first transportation unit switch (40) and the heating element (22) form a first transportation unit circuit branch (38), and the second transportation unit switch (44) and the temperature sensor (24) form a second transportation unit circuit branch (42); and wherein the first transportation unit circuit branch (38) and the second transportation unit circuit branch (42) are parallel-connected between the transportation unit connection terminals (34a, 34b).

4. A transportation unit as claimed in Claim 2 or 3, wherein the first transportation unit switch (40) and the second transportation unit switch (44) are diodes connected so that the first diode (40) conducts and the second diode (44) is disabled when a first voltage (VSH) with a first polarity is present between the transportation unit connection terminals (34a, 34b), and the second diode (44) conducts and the first diode (40) is disabled when a second voltage (VSM) with a second polarity opposite the first polarity is present between the transportation unit connection terminals (34a, 34b).

5. A transportation unit as claimed in Claim 4, wherein the first transportation unit switch (40) has a cathode terminal connected to an anode terminal of the second transportation unit switch (44).

6. A transportation unit as claimed in any one of the foregoing Claims, wherein the temperature sensor (24) is heat resistive.

7. A cable transportation system comprising at least one station (4); a first pulley (3) inside the station (4); a cable (2) connected to the first pulley (3); a transportation unit (7) as claimed in any one of Claims 1 to 6; a station heating device (8a) inside the station (4); and station connection terminals (25a, 25b) connectable to corresponding transportation unit connection terminals (34a, 34b), when the transportation unit (7) is inside the station (4), to connect the heating element (22) and the temperature sensor (24) of the transportation unit (7) to the station heating device (8a); and wherein the station heating device (8a) is designed to determine the amount of electric energy to supply to the heating element (22), as the transportation unit (7) travels through the station (4), on the basis of a temperature detected by the temperature sensor (24).

8. A system as claimed in Claim 7, and comprising an electric energy transmission system (10) having a first conductor (11) located inside the station (4), along the path of the transportation unit (7), and connected to the station connection terminals (25a, 25b); and a second conductor (13) located on the transportation unit (7) and connected to the first conductor (11) and to the transportation unit connection terminals (34a, 34b) to transfer electric energy from the first conductor (11) to the station connection terminals (25a, 25b) as the transportation unit (7) travels through the station (4).

9. A system as claimed in Claim 7 or 8, wherein the station heating device (8a) comprises a heating control unit (23) connectable to the heating element (22) to supply the amount of electric energy as the transportation unit travels through the station (4); a measuring module (26) connectable to the temperature sensor (24) to determine the temperature of the transportation unit (7); and station selective connection elements (29, 33) controlled by the heating control unit (23) to connect the heating control unit (23) to the heating element (22), or the measuring module (26) to the temperature sensor (24).

10. A system as claimed in Claim 9, wherein the heating control unit (23) is designed to determine the amount of electric energy to supply to the heating element (22), as the transportation unit (7) travels through the station (4), on the basis of the temperature detected by the temperature sensor (24).

11. A system as claimed in Claim 9 or 10, wherein the station selective connection elements (29, 33) comprise a first station switch (29) in series with the heating control unit (23); and a second station switch (34) in series with the measuring module (26).

12. A system as claimed in Claim 11, wherein the first station switch (29) and the heating control unit (23) form a first station circuit branch (28), and the second station switch (33) and the measuring module (26) form a second station circuit branch (31); and wherein the first station circuit branch (28) and the second station circuit branch (31) are parallel-connected between the station connection terminals (25a, 25b).

13. A system as claimed in any one of Claims 9 to 12, wherein the heating control unit (23) and the measuring module (26) are designed to supply the station connection terminals (25a, 25b) with respective voltages of opposite polarities.

14. A method of heating a transportation unit of a cable transportation system; the cable transportation system (1) comprising at least one station (4), a first pulley (3) inside the station (4), a cable (2) connected to the first pulley (3), and a transportation unit (7) connectable selectively to the cable (2) and having a heating element (22), at least one temperature sensor (24) and transportation unit connection terminals (34a, 34b) for electric connection to corresponding station connection terminals (25a, 25b) of the station (4); the method comprising the steps of:
- connecting the temperature sensor (24) electrically to the transportation unit connection terminals (34a, 34b) and disconnecting the heating element (22) in a first operating configuration by means of transportation unit selective connection elements (40, 44);
- determining the temperature of at least one portion (16, 17) of the transportation unit (7);
- connecting the heating element (22) to the transportation unit connection terminals (34a, 34b) and disconnecting the temperature sensor (24) in a second operating configuration by means of said transportation unit selective connection elements (40, 44); and
- powering the heating element (22), as the transportation unit (7) travels through the station (4), as a function of the temperature determined.

15. A method as claimed in Claim 14, and comprising the step of determining the amount of electric energy to supply to the heating element (22) as the transportation unit (7) travels through the station (4).

16. A method as claimed in Claim 14 or 15, wherein the temperature is determined on entering the station (4).

## Patentansprüche

1. Transporteinheit zur Verbindung mit einer Station (4) eines Kabeltransportsystems (1), wobei die Transporteinheit (7) umfasst: zumindest einen Temperatursensor (24), der angeordnet bzw. platziert ist, die Temperatur zumindest eines Abschnitts (16, 17) der Transporteinheit (7) zu bestimmen; zumindest ein Heizelement (22), das thermisch mit der Transporteinheit (7) verbunden ist; und Transporteinheit-Verbindungsanschlüsse (34a, 34b) zur elektrischen Verbindung mit entsprechenden Stationsverbindungsanschlüssen (25a, 25b) der Station (4); **gekennzeichnet durch** transporteinheitsselektive Verbindungselemente (40, 44), die alternativ bzw. abwechselnd aktiviert werden zum elektrischen Verbinden des Temperatursensors (24) mit den Transporteinheit-Verbindungsanschlüssen (34a, 34b) und zum Trennen des Heizelements (22) in einer ersten Betriebskonfiguration, und zum Verbinden des Heizelements (22) mit den Verbindungsanschlüssen (34a, 34b) und Trennen des Temperatursensors (24) in einer zweiten Betriebskonfiguration.

2. Transporteinheit nach Anspruch 1, wobei die transporteinheitsselektiven Verbindungselemente (40, 44) einen ersten Transporteinheitsschalter (40), der mit dem Heizelement (22) in Reihe geschaltet ist; und einen zweiten Transporteinheitsschalter (44) umfassen, der mit dem Temperatursensor (24) in Reihe geschaltet ist; und wobei der erste Schalter (40) und der zweite Schalter (44) in Gebrauch alternativ bzw. abwechselnd aktiviert werden.

3. Transporteinheit nach Anspruch 2, wobei der erste Transporteinheitsschalter (40) und das Heizelement (22) einen ersten Transporteinheit-Schaltungszweig (38) bilden und der zweite Transporteinheitsschalter (44) und der Temperatursensor (24) einen zweiten Transporteinheit-Schaltungszweig (42) bilden; und wobei der erste Transporteinheit-Schaltungszweig (38) und der zweite Transporteinheit-Schaltungszweig (42) zwischen die Transporteinheit-Verbindungsanschlüsse (34a, 34b) parallel geschaltet sind.

4. Transporteinheit nach Anspruch 2 oder 3, wobei der erste Transporteinheitsschalter (40) und der zweite Transporteinheitsschalter (44) Dioden sind, die so verbunden sind, dass die erste Diode (40) leitet und die zweite Diode (44) deaktiviert ist, wenn eine erste Spannung (VSH) mit einer ersten Polarität zwischen den Transporteinheit-Verbindungsanschlüssen (34a, 34b) vorhanden ist, und die zweite Diode (44) leitet und die erste Diode (40) deaktiviert ist, wenn eine zweite Spannung (VSM) mit einer zweiten Polarität entgegengesetzt zu der ersten Polarität zwischen den Transporteinheit-Verbindungsanschlüssen (34a, 34b) vorhanden ist.

5. Transporteinheit nach Anspruch 4, wobei der erste Transporteinheitsschalter (40) einen Kathodenanschluss aufweist, der mit einem Anodenanschluss des zweiten Transporteinheitsschalters (44) verbunden ist.

6. Transporteinheit nach einem der vorhergehenden Ansprüche, wobei der Temperatursensor (24) wärmebeständig ist.

7. Kabeltransportsystem, umfassend zumindest eine Station (4); eine erste Seilscheibe bzw. Rolle (3) innerhalb der Station (4); ein Kabel (2), das mit der ersten Seilscheibe (3) verbunden ist; eine Transporteinheit (7) nach einem der Ansprüche 1 bis 6; eine Stationsheizvorrichtung (8a) innerhalb der Station (4); und Stationsverbindungsanschlüsse (25a, 25b), die mit entsprechenden Transporteinheit-Verbindungsanschlüssen (34a, 34b) verbindbar sind, wenn sich die Transporteinheit (7) innerhalb der Station (4) befindet, um das Heizelement (22) und den Temperatursensor (24) der Transporteinheit (7) mit der Stationsheizvorrichtung (8a) zu verbinden; und wobei die Stationsheizvorrichtung (8a) ausgelegt ist, die Menge an elektrischer Energie zu bestimmen, die dem Heizelement (22) zuzuführen ist, wenn die Transporteinheit (7) die Station (4) durchläuft, und zwar auf der Basis einer durch den Temperatursensor (24) erfassten Temperatur.

8. System nach Anspruch 7, und umfassend ein Übertragungssystem (10) für elektrische Energie, das einen ersten Leiter (11), der sich innerhalb der Station (4) entlang des Weges der Transporteinheit (7) befindet und mit den Stationsverbindungsanschlüssen (25a, 25b) verbunden ist; und einen zweiten Leiter (13) aufweist, der sich an der Transporteinheit (7) befindet und mit dem ersten Leiter (11) und mit den Transporteinheit-Verbindungsanschlüssen (34a, 34b) verbunden ist, um elektrische Energie von dem ersten Leiter (11) zu den Stationsverbindungsanschlüssen (25a, 25b) zu übertragen, wenn die Transporteinheit (7) die Station (4) durchläuft.

9. System nach Anspruch 7 oder 8, wobei die Stationsheizvorrichtung (8a) umfasst: eine Heizsteuer- bzw. -regeleinheit (23), die mit dem Heizelement (22) verbindbar ist, um die Menge an elektrischer Energie zu liefern, wenn die Transporteinheit die Station (4) durchläuft; ein Messmodul (26), das mit dem Temperatursensor (24) verbindbar ist, um die Temperatur der Transporteinheit (7) zu bestimmen; und stationsselektive Verbindungselemente (29, 33), die von der Heizsteuer- bzw. -regeleinheit (23) gesteuert bzw. geregelt werden, um die Heizsteuer- bzw. -regeleinheit (23) mit dem Heizelement (22) oder das Messmodul (26) mit dem Temperatursensor (24) zu verbinden.

10. System nach Anspruch 9, wobei die Heizsteuer- bzw. -regeleinheit (23) ausgelegt ist, die Menge an elektrischer Energie zu bestimmen, die dem Heizelement (22) zuzuführen ist, wenn die Transporteinheit (7) die Station (4) durchläuft, und zwar auf Basis der von dem Temperatursensor (24) erfassten Temperatur.

11. System nach Anspruch 9 oder 10, wobei die stationsselektiven Verbindungselemente (29, 33) einen ersten Stationsschalter (29) in Reihe mit der Heizsteuer- bzw. -regeleinheit (23); und einen zweiten Stationsschalter (34) in Reihe mit dem Messmodul (26) umfassen.

12. System nach Anspruch 11, wobei der erste Stationsschalter (29) und die Heizsteuer- bzw. -regeleinheit (23) einen ersten Stationsschaltungszweig (28) bilden und der zweite Stationsschalter (33) und das Messmodul (26) einen zweiten Stationsschaltkreiszweig (31) bilden; und wobei der erste Stationsschaltungszweig (28) und der zweite Stationsschaltungszweig (31) zwischen die Stationsverbindungsanschlüsse (25a, 25b) parallel geschaltet sind.

13. System nach einem der Ansprüche 9 bis 12, wobei die Heizsteuer- bzw. -regeleinheit (23) und das Messmodul (26) ausgelegt sind, die Stationsverbindungsanschlüsse (25a, 25b) mit jeweiligen Spannungen entgegengesetzter Polarität zu versorgen.

14. Verfahren zum Beheizen einer Transporteinheit eines Kabeltransportsystems; wobei das Kabeltransportsystem (1) zumindest eine Station (4), eine erste Rolle bzw. Seilscheibe (3) innerhalb der Station (4), ein Kabel (2), das mit der ersten Seilscheibe (3) verbunden ist, und eine Transporteinheit (7) umfasst, die selektiv mit dem Kabel (2) verbindbar ist und ein Heizelement (22), einen Temperatursensor (24) und Transporteinheit-Verbindungsanschlüsse (34a, 34b) zur elektrischen Verbindung mit entsprechenden Stationsverbindungsanschlüssen (25a, 25b) der Station (4) aufweist; wobei das Verfahren die Schritte umfasst:
- elektrisches Verbinden des Temperatursensors (24) mit den Transporteinheit-Verbindungsanschlüssen (34a, 34b) und Trennen des Heizelements (22) in einer ersten Betriebskonfiguration mittels transporteinheitsselektiven Verbindungselementen (40, 44);
- Bestimmen der Temperatur zumindest eines Abschnitts (16, 17) der Transporteinheit (7);
- Verbinden des Heizelements (22) mit den Transporteinheit-Verbindungsanschlüssen (34a, 34b) und Trennen des Temperatursensors in einer zweiten Betriebskonfiguration mittels der transporteinheitsselektiven Verbindungselemente (40, 44); und
- Versorgen des Heizelements (22) mit Leistung, wenn die Transporteinheit (7) die Station (4) durchläuft, in Abhängigkeit von der bestimmten Temperatur.

15. Verfahren nach Anspruch 14, und umfassend den Schritt des Bestimmens der Menge an elektrischer Energie, die dem Heizelement (22) zuzuführen ist, wenn die Transporteinheit (7) die Station (4) durchläuft.

16. Verfahren nach Anspruch 14 oder 15, wobei die Temperatur beim Eintritt in die Station (4) bestimmt wird.

## Revendications

1. Unité de transport pour la connexion à une station (4) d'un système de transport à câble (1), l'unité de transport (7) comprenant au moins un capteur de température (24) situé pour déterminer la température d'au moins une partie (16, 17) de l'unité de transport (7) ; au moins un élément chauffant (22) connecté thermiquement au unité de transport (7) ; et
des terminaux de connexion de l'unité de transport (34a, 34b) pour la connexion électrique à des terminaux de connexion de station (25a, 25b) correspondants de la station (4) ;
**caractérisée par**
des éléments de connexion sélective de l'unité de transport (40, 44) qui sont activés alternativement pour connecter électriquement le capteur de température (24) aux terminaux de connexion de l'unité de transport (34a, 34b) et déconnecter l'élément chauffant (22) dans une première configuration de fonctionnement, et pour connecter l'élément chauffant (22) aux terminaux de connexion de l'unité de transport (34a, 34b) et déconnecter le capteur de température (24) dans une deuxième configuration de fonctionnement.

2. Unité de transport selon la revendication 1, dans laquelle les éléments de connexion sélective de l'unité de transport (40, 44) comprennent un premier interrupteur de l'unité de transport (40) connecté en série à l'élément chauffant (22) ; et un deuxième interrupteur de l'unité de transport (44) connecté en série au capteur de température (24) ; et
dans laquelle en utilisation, le premier interrupteur (40) et le deuxième interrupteur (44) sont activés alternativement.

3. Unité de transport selon la revendication 2, dans laquelle le premier interrupteur de l'unité de transport (40) et l'élément chauffant (22) forment une première branche de circuit de l'unité de transport (38), et le deuxième interrupteur de l'unité de transport (44) et le capteur de température (24) forment une deuxième branche de circuit de l'unité de transport (42) ; et
dans laquelle la première branche de circuit de l'unité de transport (38) et la deuxième branche de circuit de l'unité de transport (42) sont connectées en parallèle entre les terminaux de connexion de l'unité de transport (34a, 34b).

4. Unité de transport selon la revendication 2 ou 3, dans laquelle le premier interrupteur de l'unité de transport (40) et le deuxième interrupteur de l'unité de transport (44) sont des diodes connectées de sorte que la première diode (40) est conductrice et la deuxième diode (44) est désactivée lorsqu'une première tension (VSH) avec une première polarité est présente entre les terminaux de connexion de l'unité de transport (34a, 34b), et la deuxième diode (44) est conductrice et la première diode (40) est désactivée lorsqu'une deuxième tension (VSM) avec une deuxième polarité opposée à la première polarité est présente entre les terminaux de connexion de l'unité de transport (34a, 34b).

5. Unité de transport selon la revendication 4, dans laquelle le premier interrupteur de l'unité de transport (40) a une borne de cathode connectée à une borne d'anode du deuxième interrupteur de l'unité de transport (44).

6. Unité de transport selon l'une quelconque des revendications précédentes, dans laquelle le capteur de température (24) est résistant à la chaleur.

7. Système de transport à câble comprenant au moins une station (4) ; une première poulie (3) à l'intérieur de la station (4) ; un câble (2) connecté à la première poulie (3) ; une unité de transport (7) selon l'une quelconque des revendications 1 à 6 ; un dispositif de chauffage de station (8a) à l'intérieur de la station (4) ; et des terminaux de connexion de station (25a, 25b) pouvant être connectés à des terminaux de connexion de l'unité de transport (34a, 34b) correspondants, lorsque l'unité de transport (7) est à l'intérieur de la station (4), pour connecter l'élément chauffant (22) et le capteur de température (24) de l'unité de transport (7) au dispositif de chauffage de station (8a) ; et dans lequel le dispositif de chauffage de station (8a) est conçu pour déterminer la quantité d'énergie électrique à fournir à l'élément chauffant (22), à mesure que l'unité de transport (7) circule à travers la station (4), sur la base d'une température détectée par le capteur de température (24).

8. Système de transport à câble selon la revendication 7, et comprenant un système de transmission d'énergie électrique (10) ayant un premier conducteur (11) situé à l'intérieur de la station (4), le long du trajet de l'unité de transport (7), et connecté aux terminaux de connexion de station (25a, 25b) ; et un deuxième conducteur (13) situé sur l'unité de transport (7) et connecté au premier conducteur (11) et aux terminaux de connexion de l'unité de transport (34a, 34b) pour transférer l'énergie électrique du premier conducteur (11) aux terminaux de connexion de station (25a, 25b) à mesure que l'unité de transport (7) circule à travers la station (4).

9. Système de transport à câble selon la revendication 7 ou 8, dans lequel le dispositif de chauffage de station (8a) comprend une unité de commande de chauffage (23) pouvant être connectée à l'élément chauffant (22) pour fournir la quantité d'énergie électrique à mesure que l'unité de transport circule à travers la station (4) ; un module de mesure (26) pouvant être connecté au capteur de température (24) pour déterminer la température de l'unité de transport (7) ; et des éléments de connexion sélective de station (29, 33) commandés par l'unité de commande de chauffage (23) pour connecter l'unité de commande de chauffage (23) à l'élément chauffant (22), ou le module de mesure (26) au capteur de température (24).

10. Système de transport à câble selon la revendication 9, dans lequel l'unité de commande de chauffage (23) est conçue pour déterminer la quantité d'énergie électrique à fournir à l'élément chauffant (22), à mesure que l'unité de transport (7) circule à travers la station (4), sur la base de la température détectée par le capteur de température (24).

11. Système de transport à câble selon la revendication 9 ou 10, dans lequel les éléments de connexion sélective de station (29, 33) comprennent un premier interrupteur de station (29) en série avec l'unité de commande de chauffage (23) ; et un deuxième interrupteur de station (34) en série avec le module de mesure (26).

12. Système de transport à câble selon la revendication 11, dans lequel le premier interrupteur de station (29) et l'unité de commande de chauffage (23) forment une première branche de circuit de station (28), et le deuxième interrupteur de station (33) et le module de mesure (26) forment une deuxième branche de circuit de station (31) ; et dans lequel la première branche de circuit de station (28) et la deuxième branche de circuit de station (31) sont connectées en parallèle entre les terminaux de connexion de station (25a, 25b).

13. Système de transport à câble selon l'une quelconque des revendications 9 à 12, dans lequel l'unité de commande de chauffage (23) et le module de mesure (26) sont conçus pour fournir aux terminaux de connexion de station (25a, 25b) des tensions respectives de polarités opposées.

14. Procédé de chauffage d'une unité de transport d'un système de transport à câble ; le système de transport à câble (1) comprenant au moins une station (4), une première poulie (3) à l'intérieur de la station (4), un câble (2) connecté à la première poulie (3), et une unité de transport (7) pouvant être connectée sélectivement au câble (2) et ayant un élément chauffant (22), au moins un capteur de température (24) et des terminaux de connexion de l'unité de transport (34a, 34b) pour la connexion électrique à des terminaux de connexion de station (25a, 25b) correspondants de la station (4) ; le procédé comprenant les étapes de :
- connexion électrique du capteur de température (24) aux terminaux de connexion de l'unité de transport (34a, 34b) et déconnexion de l'élément chauffant (22) dans une première configuration de fonctionnement au moyen d'éléments de connexion sélective de l'unité de transport (40, 44) ;
- détermination de la température d'au moins une partie (16, 17) de l'unité de transport (7) ;
- connexion de l'élément chauffant (22) aux terminaux de connexion de l'unité de transport (34a, 34b) et déconnexion du capteur de température (24) dans une deuxième configuration de fonctionnement au moyen desdits éléments de connexion sélective de l'unité de transport (40, 44) ; et
- alimentation de l'élément chauffant (22), à mesure que l'unité de transport (7) circule à travers la station (4), en fonction de la température déterminée.

15. Procédé selon la revendication 14, et comprenant l'étape de détermination de la quantité d'énergie électrique à fournir à l'élément chauffant (22), à mesure que l'unité de transport (7) circule à travers la station (4).

16. Procédé selon la revendication 14 ou 15, dans lequel la température est déterminée lors de l'entrée dans la station (4).
